Europäisches Patentamt

European Patent Office

Office européen des brevets

(11) Publication number: **0 444 803 A1**

# EUROPEAN PATENT APPLICATION

(21) Application number: **91301259.7**

(22) Date of filing: **18.02.91**

(51) Int. Cl.⁵: **B60K 28/16**, G01N 19/02

(30) Priority: **02.03.90 GB 9004674**

(43) Date of publication of application:
**04.09.91 Bulletin 91/36**

(84) Designated Contracting States:
**DE ES FR GB IT SE**

(71) Applicant: **LUCAS INDUSTRIES PUBLIC LIMITED COMPANY**
**Brueton House, New Road**
**Solihull, West Midlands B91 3TX(GB)**

(72) Inventor: **Bridgens, Barry John**
**Winding Mill South**
**Quarry Bank, West Midlands, DY5 2LW(GB)**

(74) Representative: **Robinson, John Stuart et al**
**Marks & Clerk Alpha Tower Suffolk Street**
**Queensway**
**Birmingham, B1 1TT(GB)**

(54) Method of and apparatus for controlling wheel spin.

(57) A spin calculator (7) supplies a signal indicating the presence and amount of wheel spin to a target spin calculator (8). The target spin calculator (8) calculates surface friction as the quotient of the integral of engine power demand from a power demand controller (9) and the integral of wheel spin, and forms the target spin as the product of surface friction and a constant. A spin controller (10) reduces the engine power demand when the wheel spin exceeds the target spin.

FIG 1

The present invention relates to a method of and an apparatus for controlling wheel spin.

Wheeled vehicles depend upon the maintenance of an adequate frictional contact between the driven wheels of the vehicle and the ground. When the driving force at the driven wheels exceeds a value which is related to the weight acting on the driven wheels and the coefficient of friction of the ground surface, the driven wheels slip with respect to the ground, thus exhibiting the phenomenon known as wheel spin. During normal operation of a vehicle on surfaces of relatively high coefficient of friction, such as dry tarmac, wheel spin is not a problem. However, on surfaces of relatively poor coefficient of friction, such as waterlogged tarmac, ice, and muddy surfaces, poor driving technique can give rise to wheel spin.

When a wheel spins excessively, the loss of proper frictional contact with the ground allows the wheel to slip sideways and, in extreme cases, can result in spinning or excessive yawing of the vehicle i.e. lateral instability. Small amounts of wheel spin do not result in substantial lateral instability and may even be beneficial for maximising acceleration of the vehicle or preventing damage to the vehicle transmission caused by careless or over-enthusiastic driving techniques. However, excessive amounts of wheel spin should be avoided and, for this purpose, so-called "traction control" systems have been developed.

Known traction control systems measure the amount of wheel spin and, when this exceeds a fixed threshold, reduce the engine power demand so as to reduce wheel spin below the fixed threshold. In order for such systems to be effective on ground surfaces of very low coefficient of friction, such as ice, the wheel spin threshold has to be set to a relatively low value. However, when wheel spin occurs on surfaces of higher coefficient of friction such as muddy road surfaces, the traction control system reduces wheel spin to below the fixed threshold whereas a higher threshold of wheel spin could be tolerated and may permit higher acceleration. The performance of the vehicle can therefore suffer so as to ensure that lateral stability is maintained for all types of surface.

According to a first aspect of the invention, there is provided a method of controlling wheel spin, comprising detecting the presence and amount of wheel spin, estimating surface friction as a function of the amount of wheel spin and vehicle driving force, calculating a target spin value as a linear function of the estimated surface friction, comparing the amount of wheel spin with the target wheel spin value, and reducing the vehicle driving force when the amount of wheel spin exceeds the target spin value.

According to a second aspect of the invention, there is provided an apparatus for controlling wheel spin, comprising means for detecting the presence and amount of wheel spin, means for estimating surface friction as a function of the amount of wheel spin and vehicle driving force, means for calculating a target spin value as a linear function of the estimated surface friction, means for comparing the amount of wheel spin with the target spin value, and means for reducing the vehicle driving force when the amount of wheel spin exceeds the target spin value.

The surface friction may be estimated as the quotient of a first function of the vehicle driving force and a second function of the wheel spin. Preferably, each of the first and second functions has an integral term. Thus, the surface friction may be estimated as the integral of the vehicle driving force divided by the integral of wheel spin. Alternatively, the surface friction may be estimated by dividing the low-pass filtered vehicle driving force by the low-pass filtered wheel spin.

The target spin value may be calculated as the product of the estimated surface friction and a constant representing system gain.

The vehicle engine power demand may be used as the vehicle driving force, for instance derived from an engine management system. Detection of the presence and amount of wheel spin may be provided in an anti-lock braking system of the vehicle.

It is thus possible to adapt the control of wheel spin to the existing ground conditions by varying the target spin value against which wheel spin is compared in accordance with the prevailing estimated surface friction. Such an arrangement permits maximum vehicle acceleration to be available under all driving conditions for surfaces of widely differing coefficients of friction while ensuring that lateral instability of the vehicle is avoided. In the case of vehicles equipped with engine management systems and anti-lock brake systems, little or no additional hardware is required. In particular anti-lock brake systems receive suitable signals from wheel speed sensors and obtain from these signals an indication of the amount of wheel spin, and engine management systems are generally based on data processing systems including microcomputers controlled by software, so that wheel spin control can be implemented merely by suitably augmenting the software of the engine management system.

In such vehicles, wheel spin control can be provided at minimal extra cost.

The invention will be further described, by way of example, with reference to the accompanying drawings, in which:

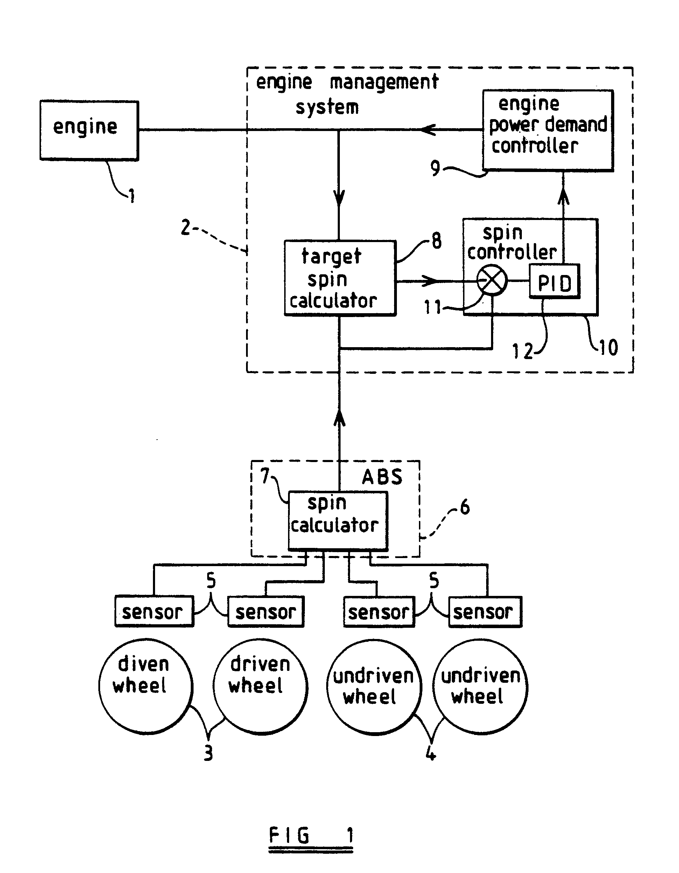

Figure 1 is a block schematic diagram of a wheel spin controller constituting a preferred embodiment of the invention; and

Figure 2 is a flow diagram illustrating part of the operation of the controller of Figure 1.

A vehicle is driven by an internal combustion engine 1 whose operation is controlled by an engine management system 2. The vehicle has a pair of driven wheels 3 connected by a transmission (not shown) to the engine 1. The vehicle also has a pair of undriven wheels 4.

The wheels 3 and 4 are provided with respective sensors 5, such as variable reluctance transducers cooperating with toothed wheels, which provide signals representing the speeds of the wheels. The wheel speed signals are supplied to an anti-lock brake system 6 which includes a spin calculator 7 for providing an output signal representing the amount of wheel spin detected. For instance, the spin calculator 7 compares the speeds of the driven wheels 3 with the speeds of the undriven wheels 4 in order to detect excessive driven wheel speed and supplies a spin signal corresponding to the difference between driven wheel speed and undriven wheel speed as a proportion of undriven wheel speed.

In the case of a vehicle which does not have an anti-lock brake system, the spin calculator 7 and the sensors 5 may be provided in order to permit traction or wheel spin control. Also, wheel spin may be determined in other ways, for instance, by comparing the speed of each wheel with an average speed of all wheels or by comparing wheel speed with vehicle speed determined by a speed over ground sensor or the like. Wheel spin control may also be provided for all-wheel drive vehicles, for instance using one of the above mentioned alternative wheel spin detection techniques in place of the comparison with undriven wheel speed illustrated in the drawings.

The engine management system 2 includes a target spin calculator 8 which receives the wheel spin signal from the spin calculator 7 and an engine power demand signal from an engine power demand controller 9. The target spin calculator 8 calculates a target spin value in accordance with a function which will be described hereinafter. The target spin value and the spin signal are supplied to a spin controller 10, which provides a signal to the engine power demand controller 9 for reducing the power demand when the wheel spin exceeds the target spin value. The controller 10 comprises a subtractor 11 whose adding input receives the spin signal from the spin calculator 7 and whose subtracting input receives the target spin value from the calculator 8. The subtractor 11 is of the type which produces no output signal when the spin signal is less than the target spin value and produces an output signal corresponding to the difference between the spin signal and the target spin value when the target spin value is exceeded by the spin signal. This difference signal is supplied to a proportional integral differential (PID) controller 12 whose output forms the output of the spin controller 10.

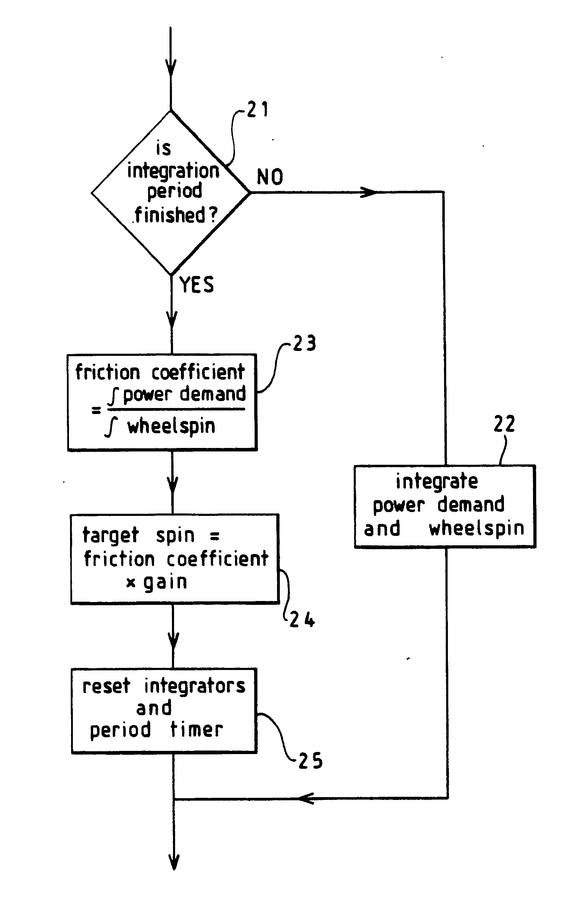

The flow diagram in Figure 2 illustrates the operation of the target spin calculator 8. The calculator 8 forms part of the engine management system and is implemented as a data processor controlled by software. The flow diagram in Figure 2 illustrates part of the software used to implement wheel spin control.

In a first step 21, a timer is checked to ascertain whether an integration period has been completed. If not, the power demand and the wheel spin are each integrated with respect to time at 22 and control passes to another part of the system (not shown) before returning to the step 21. When the step 21 determines that the integration period has finished, the friction coefficient is determined as the quotient of the integrated power demand and the integrated wheel spin in a step 23. In a step 24, the target spin value is calculated as the product of the friction coefficient and a constant representing system gain. In a step 25, the power demand and wheel spin integrators are set to zero and the integration period timer is reset.

In the absence of wheel spin, the functions illustrated in Figure 2 are not performed. In the presence of wheel spin, as detected by the wheel spin calculator 7, the function illustrated in Figure 2 is performed periodically so as to update the target spin value in accordance with the prevailing friction coefficient. The system thus adapts to changes in friction coefficient which occur as surface conditions change, and is even capable of adapting to changes in friction coefficient during an individual wheel spin.

The spin controller 10 causes the engine power demand produced by the controller 9 to be reduced whenever wheel spin exceeds the prevailing target spin value. For instance the engine power demand controller 9 reduces the engine power demand to a percentage of the normal figure in the presence of a signal from the spin controller 10. In calculating the prevailing target spin value, the calculator 8 receives the reduced engine power demand and makes use of this, together with changes in wheel spin resulting from this and/or from changes in surface friction in order to update the target spin value. Suitable delays may be introduced into the system as necessary in order to compensate for the naturally occurring delays between cause and effect during wheel spin control.

Although it is preferred that the wheel spin controller be implemented as software-controlled data processing hardware, it is possible for the controller to be implemented in other ways. For instance the controller could be implemented as an analog circuit, as a discrete digital circuit, or as a combination. Also, the controller may be implemented as an independent unit for addition to an engine management system and/or an anti-lock brake system, or for use in vehicles which do not have such systems on board.

By adapting the target spin value to the prevailing surface conditions, the controller ensures that maximum performance is available at all times while substantially preventing or greatly reducing the chances of lateral instability of a vehicle. In the case of a vehicle equipped with an anti-lock brake system and a microcomputer-based engine management system, the controller may be implemented merely by augmenting the software of the engine management system and without requiring any additional hardware. Thus, existing engine management systems can easily be modified to implement the wheel spin control function and merely require a signal from the anti-lock brake system indicating detection and amount of wheel spin.

## Claims

1. An apparatus for controlling wheel spin, comprising means for detecting the presence and amount of wheel spin, means for comparing the amount of wheel spin with a target value, and means for reducing vehicle driving force when the amount of wheel spin exceeds the target spin value, characterised by means (8, 22, 23) for estimating surface friction as a function of the amount of wheel spin and the vehicle driving force, and means (8, 24) for calculating the target spin value as a linear function of the estimated surface friction.

2. An apparatus as claimed in Claim 1, characterised in that the estimating means (8, 22, 23) is arranged to estimate the surface friction as the quotient of a first function of the vehicle driving force and a second function of the wheel spin.

3. An apparatus as claimed in Claim 2, characterised in that the first function has an integral term.

4. An apparatus as claimed in Claim 3, characterised in that the first function is the integral of the vehicle driving force.

5. An apparatus as claimed in Claim 3, characterised in that the first function is a low-pass filtering function.

6. An apparatus as claimed in any one of Claims 2 to 5, characterised in that the second function has an integral term.

7. An apparatus as claimed in Claim 6, characterised in that the second function is the integral of wheel spin.

8. An apparatus as claimed in Claim 6, characterised in that the second function is a low-pass filtering function.

9. An apparatus as claimed in any one of the preceding claims, characterised in that the calculating means (8, 24) comprises a multiplier for multiplying the estimated surface friction by a constant.

10. An method of controlling wheel spin, comprising detecting the presence and amount of wheel spin, estimating surface friction as a function of the amount of wheel spin and vehicle driving force, calculating a target spin value as a linear function of the estimated surface friction, comparing the amount of wheel spin with the target spin value, and reducing the vehicle driving force when the amount of wheel spin exceeds the target spin value.

11. A method as claimed in Claim 10, characterised by estimating the surface friction as the quotient of a first function of the vehicle during force and a second function of the wheel spin.

12. A method as claimed in Claim 11, characterised in that the first function has an integral term.

13. A method as claimed in Claim 12, characterised in that the first function is the integral of the vehicle driving force.

14. A method as claimed in Claim 12, characterised in that the first function is a low-pass filtering function.

15. A method as claimed in any one of Claims 11 to 14, characterised in that the second function has an integral term.

16. A method as claimed in Claim 15, characterised in that the second function is the integral of the wheel spin.

17. A method as claimed in Claim 15, characterised in that the second function is a low-pass filtering function.

18. A method as claimed in any one of Claims 10 to 17, characterised in that the target spin value is calculated as the product of the estimated surface friction and a constant.

FIG 1

6

is
integration
period
finished ? — 21

NO

YES

friction coefficient
$= \dfrac{\int \text{power demand}}{\int \text{wheelspin}}$ — 23

target spin =
friction coefficient
× gain — 24

reset integrators
and
period timer — 25

integrate
power demand
and wheelspin — 22

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,Y | EP-A-0 318 857 (BAYERISCHE MOTOREN WERKE) <br> * claims 1, 3 * * column 7, line 1 - column 8, line 7; figure 2 * <br> – – – | 1,9,10,18, 2,11 | B 60 K 28/16 <br> G 01 N 19/02 |
| A | PATENT ABSTRACTS OF JAPAN vol. 11, no. 168 (M-594) 29 May 1987, <br> & JP-A-62 003137 (TOYOTA MOTOR) 09 January 1987, <br> * the whole document * <br> – – – | 1,2,10,11 | |
| A | US-A-4 682 667 (HOSAKA) <br> * column 1, last paragraph; figure 8 * <br> – – – | 1,10 | |
| Y | PATENT ABSTRACTS OF JAPAN vol. 12, no. 136 (P-694) 26 April 1988, <br> & JP-A-62 257043 (MAZDA MOTOR) 09 November 1987, <br> * the whole document * <br> – – – – – | 2,11 | |

| | TECHNICAL FIELDS SEARCHED (Int. Cl.5) |
|---|---|
| | B 60 K <br> G 01 N |

The present search report has been drawn up for all claims

| Place of search | Date of completion of search | Examiner |
|---|---|---|
| Berlin | 06 June 91 | BROYDE M P |

CATEGORY OF CITED DOCUMENTS
X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

& : member of the same patent family, corresponding document